# EUROPEAN PATENT APPLICATION

(11) **EP 4 094 584 A1**
(43) Date of publication of application: **30.11.2022**
(21) Application number: 21305699.7
(22) Date of filing: 27.05.2021
(51) Int. Cl.: A23J 3/22, A23J 3/14, A23L 7/10, A23L 13/60, A23L 19/00, A23L 33/185, A23P 30/20

(54) **METHOD FOR PRODUCING PLANT-BASED SAUSAGES**

(71) Applicant: Les Nouveaux Fermiers, 75017 Paris (FR)
(72) Inventor: MUREAU, Clémentine, Marie, 78430 LOUVECIENNES (FR); LEGAY, Guillaume, Jonathan, Thomas, 91640 FONTENAY-LÈS-BRIIS (FR)
(74) Representative: Lavoix

(57) **Abstract**

The present invention concerns the preparation of plant-based sausage analogues having a more granular texture. The process involves hydrating an extruded plant protein, preparing an emulsion and mixing the hydrated plant protein and the emulsion before forming the sausage. All steps are carried out under very low shear.

## Description

The present invention concerns the preparation of plant-based sausages.

Increasing concerns about wellbeing in ethical, social, health, and ecological aspects have resulted in an increase in the number of vegetarians. The replacement of meat protein with plant protein has therefore become an important research topic. However, meat sausage analogues are generally different from meat sausage in terms of mouthfeel, texture, taste, and flavour.

Meat sausage analogues are primarily vegetable based food products that contain proteins made from pulses (mainly soy), cereal protein, or fungi. There was a sharp increase in the consumption of meat analogues around 2001 after a number of food safety crises (B.S.E., food and mouth disease) in the meat sector. Soon after that period, the growth in the market stabilised.

The difficulty with establishing a broad acceptance of meat sausage analogues is probably related to several aspects. Firstly, these types of products are relatively new. Secondly, a large difference in the perceived product quality of meat sausage and meat sausage analogues is likely to play an important role. Both experience quality attributes such as convenience, freshness, and sensory characteristics, and credence quality attributes (e.g. healthiness) are important for consumer's buying behaviour of meat sausage. Meat sausage is especially appreciated for its sensory properties, its unique taste and texture. A few studies investigated consumers' evaluation of both meat sausage and meat sausage analogues and found that meat sausage substitutes stayed behind in overall evaluation and in particular the sensory appreciation.

There is thus still an important need for meat sausage analogues displaying sensory attributes similar to "real" meat sausage.

The present invention meets this need.

The present invention arises from the unexpected finding by the invention that, by mixing a batch comprising plant textured proteins and a batch comprising an emulsion of texturing and binding agents, it was possible to obtain a meat sausage analogue displaying a granular and crumbly texture very similar to the one of "real" meat sausage, without using any animal ingredient.

The present invention thus concerns a method for manufacturing plant-based sausage analogue products, said method comprising:
a) preparing a batch (P) of plant textured proteins by hydrating said plant textured proteins with an aqueous solution, optionally comprising at least one coloring and/or flavoring agent and/or a preservative, under low shear in a mixing equipment devoid of blades and paddles,
b) preparing a batch (E) of texturing emulsion by
   b1) dispersing in oil a mixture comprising a texturing agent and at least one other binding agent,
   b2) mixing said dispersion with an aqueous solution under low shear,
c) mixing said batches (P) and (E) under low shear, and
d) forming plant-based sausage analogue products from the mixture obtained at step c).

### Detailed description of the invention

### Preparation of batch (P)

Step a) of the method of the invention consists in preparing a batch (P) of plant textured proteins by hydrating said plant textured proteins with an aqueous solution under low shear conditions.

By "plant textured proteins", also called "textured vegetable protein" is meant herein a defatted plant flour product, typically a by-product of extracting plant oil. Plant textured proteins are usually made from soy protein isolate, soy flour or soy protein concentrate, but can also be made from cotton seeds, wheat, peas, fava beans and oats. Plant textured proteins contains at least 50% (w/w) proteins, preferably at least 60%, 65% or 70%.

Said plant textured proteins are typically obtained by an extrusion process.

Plant textured proteins can typically be extruded into various shapes (chunks, flakes, nuggets, grains, and strips) and sizes. During the extrusion process, the defatted thermoplastic proteins are typically heated to 150-200°C, which denatures them into a fibrous, insoluble, porous network that can soak up as much as three times its weight in liquids.

By "aqueous solution" is meant herein a solution in which the solvent is water.

In a particular embodiment, said aqueous solution is water.

The water can be pure water, tap water, bottled water, deionized water, spring water, natural juice *(i.e.* liquid based extract from a non-animal source such as a plant or any part of a plant), modified natural juice, or a mixture thereof. Thus, the aqueous solution may be water further comprising salts or minerals or both.

In a particular embodiment, said aqueous solution further comprises at least one coloring and/or flavoring agent and/or preservative.

As used herein, the term "coloring agent" refers to a compound that confers a color on a food product.

Examples of suitable coloring agents include artificial colorants, natural colorants, natural extracts or powders (*e.g*. beet root extract or powder, pomegranate fruit extract, cherry extract, carrot extract, red cabbage extract, red seaweed extract), modified natural extracts, natural juices (*e.g*. beet root juice, pomegranate fruit juice, cherry juice, carrot juice, red cabbage juice, red seaweed juice), modified natural juices, erythrosine, fast green FCF, allura red AC, tartazine, sunset yellow FCF, brilliant blue FCF, indigotine, titanium oxide, annatto, anthocyanins. betanins, beta-APE 8 carotenal, beta-carotene, black currant, burnt sugar, canthaxanthin, caramel, carmine/carminic acid, cochineal extract, curcumin, lutein, carotenoids, monascin, paprika, riboflavin, saffron, turmeric, and combinations thereof.

In a particular embodiment, said coloring agent is beet root powder.

As used herein, the term "flavoring agent" refers to a volatile substance that activates aroma receptors in the olfactory system.

Examples of flavoring agents include but are not limited to oil soluble flavoring compounds, water soluble flavoring compounds, volatile flavoring compounds, meat-like furans, aldehydes, guaicol, 3-methyl-butanal, methional, 2--acetyl-2-thiazoline, 2-ethyl-3,5-dimethylpyrazine, 2,3-diethyl-5-methylpyrazine, 3-hydroxy-4,5-dimethyl-2(5H)-furanone, 4-hydroxy-2,5-dimethyl-3(2H)-furanone, octen-3-ol, phenyl acetic acid, 2,4-decadienal, ionone beta, trithioacetone, benzyl mercaptan, furfuryl mercaptan, methyl furfuryl disulfide, oil onion, pyrazine, ammonium sulfide, dimethyl sulfide, acetoin, methional, para cresol, phenyl acetaldehyde, isovaleraldehyde, 5-methyl-2-phenyl-5-hexenal, homofuranol, 2-methyl tetrahydrofuran-3-thiol, methyl mercaptan, furaneol, indole, precursor molecules *(i.e.* molecules that can specifically or non-specifically react with each other or other compounds to produce agents that impart or enhance flavors; e.g. Maillard reaction precursors), and combinations and derivatives thereof.

As used herein, the term "preservative" refers to a substance that prevents microbial growth and alteration of food products by undesirable chemical changes induced by microbial growth.

Examples of preservatives include for instance acetic acid, citric acid, calcium acetate, calcium propionate, benzoates (benzoic acid, sodium benzoate, potassium benzoate, and calcium benzoate), benzoyl peroxide, potassium sorbate, and isopropyl citrate.

Typically in step a), a batch comprising (w/w) 30-40% plant textured proteins and 60-70% aqueous solution (e.g. 50-65% water and 5-15% powdery ingredients dispersed in water) is prepared.

In a particular embodiment, said aqueous solution used in step a) has a temperature lower than 10°C, more particularly a temperature lower than 9°C, lower than 8°C, lower than 7°C, lower than 6°C, or lower than 5°C. In still a particular embodiment, said aqueous solution used in step a) has a temperature comprised between 0°C and 10°C, between 1°C and 9°C, between 2°C and 8°C, between 3°C and 7°C, between 3°C and 6°C, between 3°C and 5°C, typically of 4°C.

By "hydrating plant textured proteins" is meant herein making said plant textured proteins absorb water.

Typically, said hydration can be performed by contacting said plant textured proteins with the aqueous solution defined above.

Said contacting may be implemented by immersing said plant textured proteins in said aqueous solution.

As will be understood by the skilled person, the period of time during which said hydration is performed needs to be sufficient to enable said plant textured proteins to absorb the water of the aqueous solution.

In a particular embodiment, said hydration is performed for a period of time comprised between 5 min and 24 hours, in particular between 10 min and 15 hours, between 15 min and 10 hours, between 20 min and 5 hours, between 25 min and 2 hours, between 30 min and 1 hour, between 30 min and 50 min, between 30 min and 45 min, between, 30 min and 40 min or between 30 min and 35 min.

In a particular embodiment; said hydration is performed for a period of time comprised between 15 min and 1h.

In the context of the invention, said hydration is performed under low shear conditions in a mixing equipment devoid of (cutting) blades and paddles, for example in a tumbler or a cutter with blades rotating backward. It enables hydrating the plant textured proteins without altering the texture of the proteins in order to make the texture of the final product as granular as possible.

In a particular embodiment, said hydration is performed under an agitation inferior to 50 rpm, e.g. below 50 rpm in a cutter with blades rotating backward or below 10 rpm in a tumbler.

### Preparation of batch (E)

Step b) of the method of the invention consists in preparing a batch (E) of texturing emulsion. Said step b) comprises the three following successive steps:
b1) dispersing in oil a mixture comprising a texturing agent and at least one other binding agent, and
b2) mixing said dispersion with an aqueous solution under low shear conditions, until obtaining an emulsion.

### b1) Dispersing step

By "texturing agent" is meant herein a component which increases, modifies and/or enhances the overall texture or mouthfeel of food products. Texturizing agents used herein are suitable for addition to a food product.

Texturing agents typically include thickening agents, gelling agents, stabilizing agents, emulsifying agents and binding agents.

In a particular embodiment, said texturing agent is selected from the group consisting of starches (such as arrowroot, corn starch, katakuri starch, potato starch, sago, wheat flour, almond flour, tapioca and their starch derivatives), alginin, guar gum, locust bean gum, xanthan gum, collagen, egg whites, agar, carboxymethyl cellulose, methylcellulose, pectin and carrageenan.

In a particular embodiment, said texturing agent is methylcellulose.

By "binding agent" is meant herein any material or substance that holds or draws other materials together to form a cohesive whole mechanically, chemically, by adhesion or cohesion.

Examples of suitable binding agents include but are not limited to starches, in particular native or modified starches (e.g., starches from grains, starches from tuber, potato starch, sweet potato starch, corn starch, waxy corn starch, tapioca starch, tapioca, arrowroot starch, taro starch, pea starch, chickpea starch, rice starch, waxy rice starch, lentil starch, barley starch, sorghum starch, wheat starch, and physical or chemical modifications thereof (including *e.g*. pre-gelatinized starch, acetylated starch, phosphate bonded starch, carboxymethylated starch, hydroxypropylated starch), protein isolates (*e.g*. from potato, soy, pea, lentil, fava bean chickpea, lupin, oat, canola, wheat), hydrolyzed protein isolates (*e.g*, hydrolyzed pea protein isolate, hydrolyzed soy protein isolate), protein concentrates (*e.g*. from algae, lentil, pea, soy, chickpea, rice, hemp, fava bean, pigeon pea, cowpea, vital wheat gluten), and emulsifying functional proteins (*e.g*. from algae, potato, soy, pea, lentil, chickpea, lupin, oat, canola, wheat).

In a particular embodiment, said at least one binding agent is selected from the group consisting of starches and emulsifying functional proteins.

In the context of the invention, the mixture comprising a texturing agent and at least one binding agent (which is not the texturing agent, e.g. protein isolates), is dispersed in oil. According to an embodiment the mixture comprises methylcellulose, fava bean protein isolate, protein isolate, and potato starch.

By "oil" is meant herein any nonpolar chemical substance that is a viscous liquid at ambient temperatures and is both hydrophobic and lipophilic.

Suitable examples of oils include but are not limited to microbial oil, plant oil, algal oil, fungal oil, marine oil, almond oil, aloe vera oil, apricot kerne oil, avocado oil, baobab oil, calendula oil, canola oil, corn oil, cottonseed oil, evening primrose oil, grape oil, grape seed oil, hazelnut oil, jojoba oil, linseed oil, macadamia oil, natural oils, neem oil, non-hydrogenated oils, olive oil, palm oil, coconut oil, partially hydrogenated oils, peanut oil, rapeseed oil, sesame oil, soybean oil, sunflower oil, synthetic oils, vegetable oil, fatty acids suitable for human consumption (*e.g*. oils that are liquid at ambient temperature like avocado, mustard, coconut, cottonseed, fish, flax, seed, grape, olive, palm. peanut, rapeseed, safflower, sesame. soybean, sunflower; oils that are solid at ambient temperature like chocolate fat), sole fats (*e.g*. palm oil, palm kernel oil, coconut oil, cocoa butter, shea butter), soft fats (*e.g*. canola oil, soybean oil, sunflower oil, safflower oil, olive oil. nut oils), vegetable oils (*e.g*. from soy bean, corn, cotton seed, rapeseed, rice, peanut, and palm), and derivatives thereof.

Typically the dispersion of the at least one other texturing agent and at least one other binding agent in oil is implemented using a cutter with the blades turning backward.

Typically, said mixing is performed under an agitation inferior to 60 rpm, in particular under an agitation comprised between 10 rpm and 60 rpm, more particularly between 20 rpm and 60 rpm, between 30 rpm and 60 rpm, between 40 rpm and 60 rpm, or between 50 rpm and 60 rpm.

Generally, said mixing is performed for a period of time comprised between 1 min and 10 min preferably from 2 min to 7 min.

### b2) Mixing step under low shear conditions

By "aqueous solution" is meant herein a solution in which the solvent is water.

In a particular embodiment, said aqueous solution is water.

The water can be pure water, tap water, bottled water, deionized water, spring water, natural juice *(i.e.* liquid based extract from a non-animal source such as a plant or any part of a plant), modified natural juice, or a mixture thereof. Thus, the aqueous solution may be water further comprising salts or minerals or both.

In a particular embodiment, said aqueous solution used in step b2) has a temperature lower than 10°C, more particularly a temperature lower than 9°C, lower than 8°C, lower than 7°C, lower than 6°C, or lower than 5°C. In still a particular embodiment, said aqueous solution used in step a) has a temperature comprised between 0°C and 10°C, between 1°C and 9°C, between 2°C and 8°C, between 3°C and 7°C, between 3°C and 6°C, between 3°C and 5°C, typically of 4°C.

In the context of the invention, typically 60-70% water, 15-25% oil and 10-15% powdery ingredients are mixed (proportion w/w).

In the context of the invention, said mixing is performed under low shear conditions.

Typically the mixing of the dispersion comprising at least one other texturing agent and at least one other binding agent with the aqueous solution is implemented using a cutter with the blades turning backward. The mixing is implemented until a homogeneous emulsion is obtained.

In a particular embodiment, said mixing is performed under an agitation inferior to 70 rpm or 60 rpm, in particular under an agitation comprised between 10 rpm and 60 rpm, more particularly between 20 rpm and 60 rpm, between 30 rpm and 60 rpm, between 40 rpm and 60 rpm, or between 50 rpm and 60 rpm.

Generally, said mixing is performed for a period of time comprised between 5 min and 15 min, preferably from 5 min to 10 min, still preferably for 7-8 min.

As will be understood by the skilled person, steps a) and b) of the method of the invention may be implemented successively in any order (a) and then b), or b) and then a)), or simultaneously in parallels.

Said batches can thus be stored, typically at a temperature lower than 10°C, for example at a temperature lower than 6°C, more particularly at a temperature lower than 4°C, before implementing step c) of the method of the invention.

### Mixing of batches (P) and (E)

Step c) of the method of the invention consists in mixing said batches (P) and (E) under low shear conditions.

In a particular embodiment, said batch (P) represents from 40% to 80% of the total weight of the mixture, preferably from 40% to 70%, still preferably from 45% to 60%, from 45% to 55%, or 50% of total weight of the mixture.

In a particular embodiment, said batch (E) represents from 20% to 60% of the total weight of the mixture, preferably from 30% to 60%, still preferably from 40% to 60%, from 45% to 55%, or 45% or 50% of total weight of the mixture.

In the context of the invention, said mixing at step c) is performed under low shear conditions. Typically, said mixing is implemented using a cutter with the blades turning backward, or in a mixing equipment such as a paddle mixer, e.g. at a speed of 80 rpm or less.

In a particular embodiment, said mixing is performed under an agitation inferior to 70 rpm or 60 rpm, for example an agitation of 50 rpm or 60 rpm, and for a time below 10 min, for instance 6-8 min, e.g. about 7 min.

In a particular embodiment step c) further comprises adding at least one flavouring agent, such as spice powders or aromatic herbs.

The mixture obtained at step c) can then be submitted to optional treatment steps before the forming step d), such as storing.

### Forming of plant-based sausage analogue products

The method of the invention enables producing a plant-based sausage analogue product.

The term "sausage analogue product" as used herein refers to a food product that is not derived from an animal but has structure, texture, and/or other properties comparable to those of animal meat sausage. The term refers to uncooked, cooking and cooked sausage analogue product.

More particularly, the sausage analogue product produced by the method of the invention displays a chewing feeling similar to the one obtained with a meat sausage product.

Step d) of the method of the invention consists in forming said sausage analogue product in the desired form. To that end the mixture obtained at step c) may be poured into a pre-formed casing for food products, or co-extruded with a casing material through concentric pipes in a co-extruder so that, on exiting the co-extruder, the extruded mixture is covered by a thin film of the casing material. For instance, use may be made of an alginate containing casing composition.

In an embodiment, step d) comprises co-extruding the mixture obtained at step c) and an alginate-based casing so that the alginate-based casing is directly formed over the plant-based sausage analogue products.

As clearly apparent from the present description, one advantage of the method of the invention is to obtain a plant-based sausage analogue product, in particular giving a feeling similar to one of "real" meat sausage, without using meat.

Accordingly, in a particularly preferred embodiment, the method of the invention does not use any animal ingredient.

### Optional additional steps

After the forming step, the method of the invention may comprise additional steps of treatment of said plant-based sausage analogue product.

In a particular embodiment, the method of the invention further comprises a step e) of freezing the plant-based meat analogue products formed at step d).

Said freezing step can be implemented by any technique well-known from the skilled person. For example, said plant-based sausage analogue can be frozen in a freezing tunnel, typically at a temperature lower than -18°C.

In a particular embodiment, the method of the invention further comprises a step f) of packaging said frozen plant-based sausage analogue products under modified atmosphere.

By "modified atmosphere" is meant herein the practice of modifying the composition of the internal atmosphere of a package in order to improve the shelf life, in particular by reducing the level of oxygen and replacing it with other gases.

The present invention will be further exemplified by the figures and examples below.

### FIGURES

Figure 1 shows plant-based analogues of meat sausages made according to the method described in Example 1 (left), or according to a method of the invention as disclosed in Example 2 (right), before cooking.
Figure 2 shows plant-based analogues of meat sausages made according to the method described in Example 1 (left), or according to a method of the invention as disclosed in Example 2 (right), after cooking.

### EXAMPLES

The present examples show comparative implementation of a method initially designed for producing plant-based steak - which proved to be inadapted for obtaining plant-based analogues of meat sausages - and of the method of the invention for producing plant-based sausage analogue of meat sausage.

### Example 1: production of plant based sausages by implementation of a method adapted for producing plant-based steak.

All along the process, all mixtures remained cold (approximately 4°C). In that purpose, all the ingredients were stored at 4°C, and used at that temperature.

### A. Batch 1 : textured proteins

Proteins are textured thank to an extrusion process. By hydrating the textured proteins, typical beef mouthfeel can be mimicked.

First step of the making process is to prepare the marinade for textured proteins hydration. Beetroot powder (food coloring) and flavors are dispersed in cold water (4°C) thank to a blender for 1 min.

Then, textured proteins and marinade are added into a mixing equipment without blade and with a slow mixing mode (e.g. paddle mixer, at 60 rpm or below), and slowly mixed for 1 hour. The temperature is kept close to 4°C.

If necessary, hydrated textured proteins (batch 1) can be stored at 4°C before being mixed with the emulsion batch.

### B. Batch 2 : emulsion

The entire second batch is prepared in a bowl chopper (with at least 6 blades). All powdered ingredients (texturing and binding ingredients (i.e. methylcellulose, potato starch, protein isolate), beetroot powder) and sunflower oil are added into a bowl chopper. Then, powdered ingredients are dispersed in the oil at low speed (60 rpm).

As soon the mixture is homogenous, water is added into the bowl chopper. Mixing is maintained under a speed of 60 rpm until the mixture became homogeneous. The final mixture's temperature has to be low.

Then, the speed is increased to 2500 rpm, and kept until an emulsion get formed (1 to 3 min). At the end of this step, mixture's temperature is lower than 4°C.

A grinder, combined with a mixing equipment, can also be used to do the emulsion. Powdered ingredients and oil are added into a mixing equipment, and powdered ingredients are dispersed in the oil at low speed. Then, water is added into the mixing equipment, and the mixing is maintained under low speed until a homogenous mixture is formed.

The mixture is added into a grinder, and grinded once or several times to get an emulsion. The use of several blades and/or several plates is highly preferable to get a good emulsion. Also, it is highly preferable to use plates with small holes (e.g. holes diameter between 3 and 6 mm).

If necessary, emulsion (batch 2) can be stored at 4°C before being mixed with batch 1.

### C. End of the process

In the bowl chopper under a speed of 60 rpm, or in mixing equipment such as a paddle mixer, batch 1 and batch 2 are slowly mixed to avoid shredding the textured proteins.

Patties of 113 g, 90 mm diameter and 20 to 24 mm height are formed thanks to a forming machine.

Patties are frozen right after the forming thank to a freezing tunnel (temperature of the equipment is close to -24°C).

Then, patties are packed under modified atmosphere in order to improve their shelf life. If necessary, they can be stored (for a maximum of 6 months) at freezing temperature to be packed later.

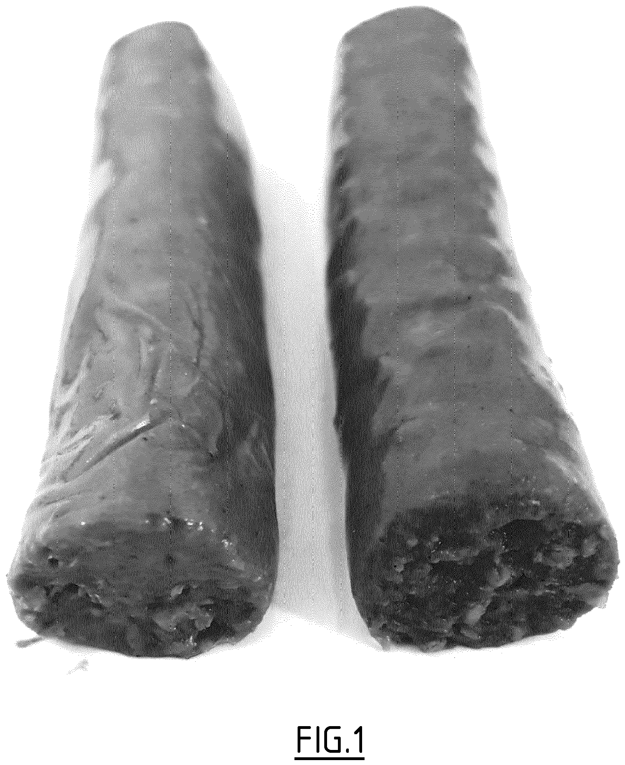

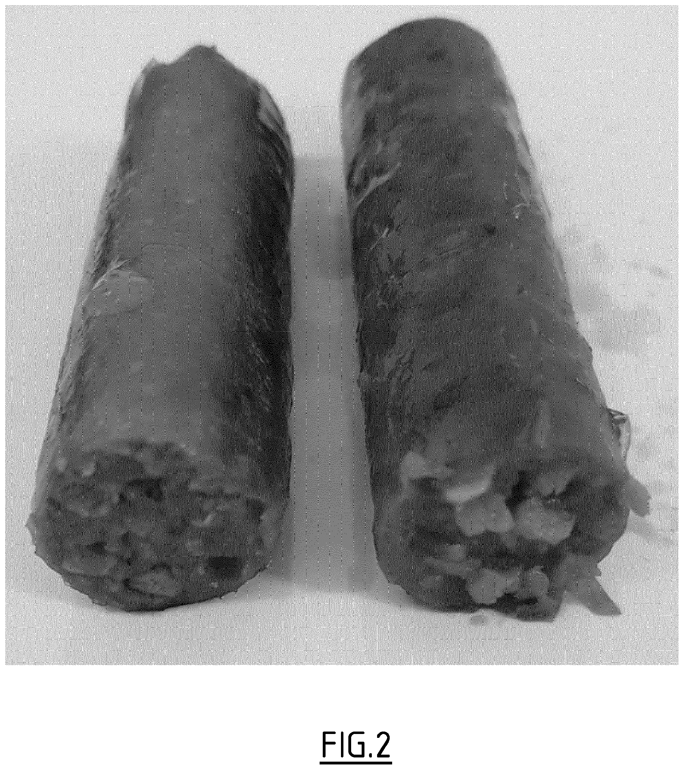

Figures 1 and 2 (left-hand sausage) show that the texture of the plant-based sausage analogue obtained by the above method is too smooth. It is thought that the conditions for hydration of the textured proteins were too drastic and led to alteration of the proteins. Furthermore, the texture of the emulsion (batch 2) obtained was thought to be too elastic to be adapted for the manufacture of sausages.

### Example 2: production of plant-based sausage analogues bv implementation of a method according to the invention

The present example shows a typical implementation of a method of the invention for producing plant-based sausages.

All along the process, all mixtures remained cold (under 10°C). In that purpose, all the ingredients were stored at 4°C, and used at that temperature.

### A. Batch 1 : textured proteins

The key ingredient of the method of the invention is plant textured proteins. Proteins are textured thank to an extrusion process. By hydrating the textured proteins, typical meat mouthfeel can be mimicked.

First step of the making process is to prepare the marinade for textured proteins hydration. Beetroot powder (food coloring), preservatives and flavors are dispersed in cold water (4°C) thank to a tumbler for 5 min.

Then, textured proteins are added into the tumbler, and slowly mixed (4 rpm) with the marinade for 45 min. Tumblers allow to mix ingredients thank to a simple rotation, without the use of blades or paddles, which is particularly advantageous to avoid shredding the textured proteins. It is also advantageous to keep the temperature below 10°C.

Altogether, the mixture contained (w/w) about 33% textured proteins, 50% water and 16% of beetroot powder, preservatives and flavors.

If necessary, hydrated textured proteins (batch 1) can be stored at 4°C before being mixed with the emulsion batch.

### B. Batch 2 : emulsion

The entire second batch is prepared in a cutter. All powdered ingredients (texturing and binding ingredients (i.e. methylcellulose, potato starch, protein isolate), beetroot powder) and sunflower oil are added into a cutter. Then, powdered ingredients are dispersed in the oil at low speed (60 rpm), for 7 min, with the blades turning backward.

As soon the mixture is homogenous, cold water (4°C) is added into the cutter. Mixing is maintained during 7 min under a speed of 60 rpm, with the blades still turning backward, until the mixture became homogeneous. This process allows forming a homogeneous emulsion, as less sheared as possible. The final mixture's temperature must be below 10°C.

Altogether, the emulsion contained (w/w) about 66% water, 20% oil and 14% powdery ingredients.

If necessary, emulsion (batch 2) can be stored at 4°C before being mixed with batch 1.

### C. End of the process

In a cutter under a speed of 60 rpm, with the blades turning backward, or in mixing equipment such as a paddle mixer, batch 1 and batch 2 are slowly mixed until a homogeneous mixture is gotten (e.g. 50 rpm for 7 min). It is particularly advantageous to mix slowly to avoid shredding the textured proteins or shearing the emulsion.

Then, spices powders are dispersed on top, and mixed until being fully homogenize.

Sausages of 50g, 150 mm length and 20.5 mm diameter are formed thanks to a grinder. An alginate based veggie casing is directly formed over the sausages thanks to a co-extrusion process. Casing weight represent from 1 to 6% of sausages weight.

Sausages are frozen right after the forming thank to a freezing tunnel (temperature of the equipment is close to -24°C).

Then, sausages are packed under modified atmosphere in order to improve their shelf life. If necessary, they can be stored (for a maximum of 6 months) at freezing temperature to be packed later.

Figures 1 and 2 (right-hand sausage) show that the texture of the plant-based sausage analogue obtained by the above method mimics the texture of a meat sausage.

## Claims

1. A method for manufacturing plant-based sausage analogue products, said method comprising:
a) preparing a batch (P) of plant textured proteins by hydrating said plant textured proteins with an aqueous solution, optionally comprising at least one coloring and/or flavoring agent and/or a preservative, under low shear in a mixing equipment devoid of blades and paddles,
b) preparing a batch (E) of texturing emulsion by
b1) dispersing in oil a mixture comprising a texturing agent and at least one other binding agent,
b2) mixing said dispersion with an aqueous solution under low shear,
c) mixing said batches (P) and (E) under low shear, and
d) forming plant-based sausage analogue products from the mixture obtained at step c).

2. The method according to claim 1, further comprising a step e) of freezing the plant-based sausage analogue products formed at step d).

3. The method according to claim 2, further comprising a step f) of packaging said frozen plant-based sausage analogue products under modified atmosphere.

4. The method according to any one of claims 1 to 3, wherein said plant textured proteins are obtained by an extrusion process.

5. The method according to any one of claims 1 to 4, wherein at step a) said hydration is performed for a period of time comprised between 15 min and 1 h.

6. The method according to any one of claims 1 to 5, wherein the mixing equipment at step a) is a tumbler.

7. The method according to any one of claims 1 to 6, wherein said aqueous solution used at step a) has a temperature lower than 10°C.

8. The method according to any one of claims 1 to 7, wherein said texturing agent is methylcellulose.

9. The method according to any one of claims 1 to 8, wherein said at least one binding agent is selected from the group consisting of starch and emulsifying functional proteins.

10. The method according to any one of claims 1 to 9, wherein the mixing under low shear at step b2) and/or c) is performed in a cutter with blades turning backward.

11. The method according to any one of claims 1 to 10, wherein the mixing under low shear at step b2) and/or c) is performed in a cutter with blades turning backward at a speed of 80 rpm or less.

12. The method according to any one of claims 1 to 11, wherein the temperature of the emulsion obtained at the end of step b2) is lower than 10°C.

13. The method according to any one of claims 1 to 12, wherein step c) further comprises adding at least one flavouring agent.

14. The method according to any one of claims 1 to 13, wherein step d) comprises co-extruding the mixture obtained at step c) and an alginate-based casing so that the alginate-based casing is directly formed over the plant-based sausage analogue products.
